(19) **Europäisches Patentamt European Patent Office Office européen des brevets**

(11) **EP 4 764 629 A1**

(12) **EUROPEAN PATENT APPLICATION**

(43) Date of publication:
24.06.2026 Bulletin 2026/26

(21) Application number: 24221664.6

(22) Date of filing: 19.12.2024

(51) International Patent Classification (IPC):
$G02B\ 6/12^{(2006.01)}$          $G02B\ 27/09^{(2006.01)}$
$G02B\ 6/14^{(2006.01)}$

(52) Cooperative Patent Classification (CPC):
**G02B 6/12004; G02B 27/0927;** G02B 6/14

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Imec VZW**
**3001 Leuven (BE)**

(72) Inventors:
• **JAFARI, Zeinab**
**3000 Leuven (BE)**

• **REZA, Manuel**
**3001 Leuven (BE)**
• **BROUCKAERT, Joost**
**8500 Kortrijk (BE)**
• **SHARIF AZADEH, Mohammad Saeed**
**3001 Leuven (BE)**
• **JANSEN, Roelof**
**3001 Heverlee (BE)**

(74) Representative: **AWA Sweden AB**
**Matrosgatan 1**
**Box 5117**
**200 71 Malmö (SE)**

(54) **NEARFIELD BEAM SHAPING DEVICE AND METHOD**

(57)     There is provided a nearfield beam shaping device. The device comprises a linear transformer comprising:
an input for receiving a light beam;
a plurality of optical gates;
a plurality of single-mode waveguides.
The optical gates distribute the power of the light into portions, each portion being distributed to a respective single-mode waveguide. The optical gates provide control of phase of the light in the single-mode waveguides. The device comprises a mode transformer comprising:
a plurality of mode transformer inputs, each being connected to a respective single-mode waveguide;

a multimode waveguide, the mode transformer inputs being coupled to the multimode waveguide for exciting a plurality of spatial modes therein; and
an output for outcoupling the plurality of modes from the mode transformer.

The device controls, based on at least the control of the phase of the portions of light in the single-mode waveguides, the relationship between the modes in the multimode waveguide for controlling the nearfield beam shape of an output light beam based on the plurality of modes outcoupled from the mode transformer.

Fig. 1

EP 4 764 629 A1

**Description**

<u>Technical field</u>

The present disclosure relates to optical beam shaping, and more specifically to a nearfield beam shaping device and method for shaping a nearfield of a light beam.

<u>Background</u>

Optical systems have found widespread application in modern society. For example, photonic integrated circuits, PICs, are found in a variety of different technical fields, such as optical measurement systems, quantum computing, and telecommunication.

For example, in on-chip flow cytometry and biosensing applications, photonics circuits and fluidics are seamlessly integrated onto a common chip. In these systems, precise and uniform illumination of the flow channel is critical to ensure reliable detection and differentiation of particles or biological entities. A flat-top (non-Gaussian) beam is often ideal for such applications, as it provides uniform intensity across a defined region, allowing for consistent illumination regardless of the particle's position within the channel. However, the beam shape typically provided by the photonic circuit for illumination is a Gaussian beam. Gaussian beams, with their high-intensity central peak and rapidly diminishing edges, require that a stable particle stream is maintained in the center of the flow channel. This poses significant challenges because any deviation in particle position due to clogging, sedimentation, or flow dynamics variations leads to substantial fluctuations in collected signals, introduces uncertainties in particle differentiation, and reduces the purity during sorting. Therefore, precise control over the spatial profile of the optical beam is critically important to address these challenges and ensure optimal performance in such applications.

Another example is dynamic ion-trapping. The ability to confine and precisely manipulate ions/atoms using optical forces plays a fundamental role in one of the most promising approaches to quantum computation. Quantum computing faces a significant hurdle in scaling the number of qubits to achieve practical systems. In trap-based quantum computation, achieving scalability involves utilizing photonic integrated circuits for concurrent trapping of multiple ions. Ions are trapped on top of a PIC, where they interact with focused beams outcoupled from the surface of the chips. However, there are challenges related to controlled relocation of the ions, maintaining high trapping efficiency, and mitigating optical aberrations that can reduce precision and scalability.

Another significant challenge related to commercial use of PICs is optical packaging. In PICs, optical packaging requires perfectly aligning input and output light from optical fibers or light sources with the photonic chip. Any slight misalignment, even on the micrometer scale, may significantly affect the performance of the device negatively, by heavily increasing the optical losses. This high sensitivity dramatically increases packaging costs since it necessitates active optical alignment during packaging process.

Hence, there is a need in the art for further improvements related to beam shaping in photonic integrated circuits.

<u>Summary</u>

An objective of the present disclosure is to mitigate, alleviate or eliminate one or more of the above-identified deficiencies in the art and disadvantages singly or in any combination. These and other objectives are at least partly met by the invention as defined in the independent claims. Preferred embodiments are set out in the dependent claims.

According to a first aspect there is provided a nearfield beam shaping device comprising:

a linear transformer comprising:

a linear transformer input configured to receive a light beam;
a plurality of optical gates;
a plurality of single-mode waveguides;

wherein the plurality of optical gates is configured to distribute a power of the light beam into a plurality of portions of the light beam, each portion of the plurality of portions of the light beam being distributed to a respective single-mode waveguide of the plurality of single-mode waveguides, and wherein the plurality of optical gates is further configured to provide control of phase of each respective portion of the light beam in the respective single-mode waveguide;
a mode transformer comprising:

a plurality of mode transformer inputs, each mode transformer input of the plurality of mode transformer inputs being connected to a respective single-mode waveguide of the plurality of single-mode waveguides;

a multimode waveguide, wherein the plurality of mode transformer inputs are coupled to the multimode waveguide for exciting a plurality of modes in the multimode waveguide, wherein each mode of the plurality of modes is a spatial mode; and

a mode transformer output configured to outcouple the plurality of modes from the mode transformer;

wherein the nearfield beam shaping device is configured to control, based on at least the control of the phase of each portion of the light beam in the respective single-mode waveguide, a relationship between the plurality of modes in the multimode waveguide for controlling a nearfield beam shape of an output light beam based on the plurality of modes outcoupled from the mode transformer.

Thus, the nearfield beam shaping device is configured to control, by either static or dynamic control, the nearfield beam shape of the output light beam. The concept is based on interference between the plurality of modes, i.e. distinct optical spatial modes, within the multimode waveguide.

It serves to mention that in the present disclosure, when a beam shape is mentioned, it refers to the shape of the distribution of the power of the light beam. Typically, it refers to a shape of the distribution of power in a cross-section in a direction perpendicular to a light propagation direction.

The nearfield beam shaping device comprises a linear transformer. A light beam to be shaped may be received at the linear transformer input. The light beam may be provided by a light source. Typically, the light beam received at the linear transformer input has a Gaussian shape. The light beam may be a light beam of at least partially coherent light. Coherent light may be advantageous as it improves the mode and interference quality. By way of example, a coherent light source may be a laser. By way of further example, an incoherent light source may e.g. be a light emitting diode, LED, emitting light through a pinhole towards the linear transformer input.

In this context the term "light" should be allowed a broad interpretation, not limited to visible electromagnetic radiation. Rather, the term "light" may also include for example ultra-violet light and infra-red light, or a combination of different wavelengths.

In the linear transformer the received light beam passes the plurality of optical gates, whereby the power of the light beam is split into a plurality of portions of the light beam, each portion being distributed into a respective single-mode waveguide of the plurality of single-mode waveguides.

It should be realized that the portions of the light being distributed from the plurality of optical gates to the plurality of single-mode waveguide, are in the same fundamental spatial mode in all the single-mode waveguides of the linear transformer.

Further, each of the optical gates is configured to provide control of phase of each respective portion of the light beam provided to the respective single-mode waveguide. By way of example, the optical gates may be implemented by 2x2 Mach-Zehnder Interferometer (MZI) comprising two phase shifters or a tunable coupler with a phase shifter.

To provide the desired beam shape in the nearfield of the output light beam, a Fourier series of the output light beam may first be determined. Subsequently, based on the determined Fourier series, the respective phase control of the respective optical gates may be set so that the portions of light in the respective single-mode waveguides correspond to the complex Fourier coefficients of the Fourier series.

Note that "control" is not limited to "active" or "dynamic" control. The wording encompasses also "passive" and "static" control, in the sense that the plurality of optical gates may distribute the light to have specific but fixed/static phase properties in the different waveguides. Thus, the phase properties of the portions of light in the different waveguides are not left to chance, but are in fact specifically provided by the optical gates, though not necessarily with the ability to actively tune or change these properties. By way of example, the phase shift may be achieved by means of phase-change materials or trimming the single-mode waveguides, which may exert a constant phase shift to portions of the light beam propagating therein.

By the term "waveguide" is here meant any unit, device and/or element within which light may be guided, and within which transmission is restricted to a single direction, thereby providing transmission with low loss. By way of example, light may be reflected on inner walls of the waveguide by total internal reflection or by means of a reflective coating provided on the walls of the waveguide. Given as non-limiting examples, the waveguide may be a transparent dielectric waveguide or an optical fiber, whereas the core of the waveguide has a larger index of refraction than the waveguide cladding material.

The nearfield beam shaping device further comprises a mode transformer with a plurality of mode transformer inputs. Each mode transformer input is connected to a respective single-mode waveguide. Each mode transformer input may thus receive the respective portion of the light beam propagating in the respective single-mode waveguide. Typically, each mode transformer input is connected to a mutually unique single-mode waveguide, such that there is a one-to-one correspondence between the single-mode waveguide and the mode transformer input.

The plurality of mode transformer inputs is coupled to the multimode waveguide of the mode transformer. In this manner, the portion of the light beam propagating in a single-mode waveguide may thus be coupled into the multimode waveguide and excite a higher order mode in the multimode waveguide. It should be realized that portions of the light beam in different single-mode waveguides may excite different modes in the multimode waveguide. Thus, the portions of the light beam propagating in the plurality of single-mode waveguides may excite a plurality of modes in the multimode waveguide. The modes excited in the multimode waveguide are optical spatial modes, i.e. modes with different spatial distribution of the light power.

Hence, it should be understood that the portions of the light in the single-mode waveguides are in the same fundamental spatial mode in all the single-mode waveguides of the linear transformer, and that the different higher order spatial modes occur in the mode transformer by excitation from the light in the single-mode waveguides.

It serves to mention that the control of phase is preferably made in the linear transformer, thus prior to the portions of the light beam entering the mode transformer. Within the multimode waveguide of the mode transformer, however, preferably no further control of the phase is being made.

The desired nearfield beam shape is generated by combining the modes in the multimode waveguide at the mode transformer output. Thus, it is the combination of the phase control of the portions of light in the respective single-mode waveguides and the subsequent propagation of the plurality of modes in the multimode waveguide excited by these portions of light, that provide the desired nearfield beam shape of the output light beam.

The phase of each mode may be calculated by expanding the desired nearfield beam shape profile into a Fourier series, a weighted summation of exponential (or equivalent) functions that can be generated by different waveguide modes. By the present arrangement, complex Fourier coefficients required to construct a desired nearfield beam shape profile may be generated in the plurality of single-mode waveguides and coupled to higher order modes in the multimode waveguide. The higher order modes are equivalent to the frequencies of Fourier series.

It serves to mention that the output light beam may be the light beam being outcoupled from the mode transformer output, i.e. the plurality of modes. However, the output light beam may alternatively be the light beam being outcoupled from another subsequent optical component, in case one or more optical components are arranged in the path of the light beam being outcoupled from the mode transformer output. By way of example, the nearfield beam shaping device may comprise an outcoupler configured to receive the plurality of modes from the mode transformer output, the details of which will be described later.

By way of example, the nearfield beam shaping device may generate a robust flat-top illumination for flow cytometry and biosensing applications. A flat-top illumination may be constructed by weighted excitations of the even modes of the multimode waveguide. By way of further example, for ion-trapping applications, the nearfield beam profile may be shaped to focus the input light within a specific region of interest where the ions should be trapped. By way of further example, in the case of post-packaging alignment of optical fibers to on-chip grating couplers, the nearfield beam profile may be tuned to match the displaced mode of the optical fiber, restoring the coupling efficiency. This may reduce the sensitivity of packaging to misalignment and increases the packaging yield.

In applications such as on-chip flow cytometry and post-packaging of the optical fibers, the shape of the nearfield beam profile may be static. This may be provided by for example using waveguides with fixed optical path lengths, e.g. fixed lengths and/or fixed refractive indexes, as phase shifters in the optical gates. In the case of on-chip flow cytometry, the optical gates may comprise fully passive power splitters and delay lines. For applications where a dynamic nearfield beam shape is required, the phase shifters may be dynamic phase shifters. Such phase shifters may be implemented based on for example thermo-optic, electro-optic, or optomechanical effects.

An advantage is that a desired beam shape may be provided already in the nearfield of the device. By way of example, the device may provide a beam profile having a flat-top shape, a Gaussian shape, or a shape of a focused beam in the nearfield. In other words, the arrangement enables generation of a static or dynamic nearfield beam shape profile, useful for a multitude of applications such as flat-top nearfield beam shape generation for on-chip flow cytometry, focused nearfield beam shape profile for ion-trapping in quantum computing applications, and post-packaging alignment of optical fibers with optical chips.

Another advantage is that the arrangement allows for the nearfield beam shape to be programmable, after fabrication. By, for example, providing optical gates wherein the phase shift is dynamically adjustable, the phase of the light beams in the plurality of single-mode waveguides may be adjusted such that resulting nearfield beam shape of the output light beam may be changed. In this manner, a device may be provided that may allow changing the nearfield beam shape depending on the applications in which the device is being used. Thus, a versatile nearfield beam shaping device may be provided.

Yet another advantage is that the arrangement allows for the device to be integrated into a photonic integrates circuit (PIC). In this manner the nearfield beam shaping device may be made very compact. In turn, this allows for the device to be used in applications in which PIC are typically used.

Yet another advantage is that the arrangement allows for a resilient approach by enabling post-fabrication tuning of the nearfield beam shape. Conventional on-chip solutions, on the other hand, are typically sensitive to fabrication imperfections within the chip.

According to an embodiment, the nearfield beam shaping device further comprises:

an outcoupler configured to receive the plurality of modes from the mode transformer output, and to transmit the output light beam based on the received plurality of modes from the outcoupler;

wherein the nearfield beam shaping device is configured to control the relationship between the plurality of modes in the multimode waveguide, thereby controlling the nearfield beam shape of the output light beam.

The outcoupler may be configured to combine the plurality of modes of the multimode waveguide, and to transmit the combined plurality of modes as the output beam. It should be realized that although the outcoupler may have an effect on the final shape of the nearfield beam profile, the effect may typically be static and may be taken into account when determining the different phase shifts in the linear transformer in order to achieve the desired nearfield beam shape of the output beam.

By way of example, in case the device is integrated into a PIC, the outcoupler may allow the output light beam to be output from the PIC such that the output light beam may be used outside the PIC. Given as a non-limiting example, the outcoupler may be a grating coupler, which allows coupling the light beam from the PIC to free space and vice versa. In this manner, the light beam may be output perpendicular to a surface of the PIC.

An advantage with the present embodiment is that a nearfield beam shaping device may be provided that allows easy coupling of the light beam in and out of the device. This, in turn, allows the light beam from inside a PIC to be coupled out to be used outside the PIC.

According to an embodiment, the outcoupler comprises at least one of a grating coupler or an edge coupler.

As mentioned above, in case the outcoupler is a grating coupler, the outcoupler allows for vertical coupling, perpendicular to the surface of the PIC. On the other hand, in case the outcoupler is an edge coupler, the outcoupler allows outcoupling of the output light beam in the same plane as the PIC.

An advantage with this embodiment is that an outcoupler may be provided in a compact and efficient manner.

According to an embodiment, the linear transformer is configured to propagate the light beam received at the linear transformer input sequentially through each optical gate of the plurality of optical gates, and wherein each optical gate is configured to split the respective portion of the light beam into the respective single-mode waveguide of the plurality of single-mode waveguides.

By way of example, the plurality of optical gates may form a matrix of 2x2 optical gates. By a 2x2 optical gate is here meant an optical gate with two ports for receiving input light and two ports for transmitting output light.

It should be realized that the power of the light beam may be distributed into the plurality of single-mode waveguides in several different manners by the plurality of optical gates. Given only as a non-limiting example, the light beam received at the linear transformer input may be provided to an input port of a first optical gate of the plurality of optical gates. The first optical gate may be configured to distribute the light beam such that a first portion of the light beam is provided to one of the output ports of the first optical gate, wherein the first portion of the light beam may be distributed into a first single-mode waveguide. The remainder of the light beam may be provided to the other one of the output ports of the first optical gate. From there, the remainder of the light beam may be provided to an input port of a second optical gate. In the second optical gate, the procedure may be repeated until the light beam has passed all of the plurality of optical gates, being distributed into portions provided to the plurality of single-mode waveguides.

According to an embodiment, the linear transformer is configured to propagate the light beam received at the linear transformer input sequentially through each optical gate of the plurality of optical gates, one by one.

According to an embodiment, each optical gate of the plurality of optical gates comprises a Mach-Zehnder Interferometer, MZI.

The Mach Zehnder interferometer may be configured to dynamically control the phase, and optionally the amplitude, of the portion of the light beam provided to the single-mode waveguide.

In the Mach Zehnder interferometer, the received light beam may be split up into two separate waveguiding arms. By applying an electric field across one of the arms, the optical path length through the arm may change, thereby resulting in a phase shift for the light passing through that arm. In this manner the phase of the portion of the light provided to the single-mode waveguide may be controlled.

According to an embodiment, the plurality of optical gates is further configured to provide control of amplitude of each respective portion of the light beam in the respective single-mode waveguide.

An advantage with this embodiment is that a nearfield beam shaping device with an additional degree of freedom may be provided. A device with the capability of controlling the amplitude as well as the phase of the portions of the light beam as provided for the plurality of single-mode waveguides may be more versatile and may provide improved fine-tuning abilities in controlling the nearfield beam shape.

According to an embodiment, each of the plurality of optical gates is configured to provide dynamic control of the phase of the portion of the light beam in the respective single-mode waveguide.

An advantage with this embodiment is that a device with programmable nearfield beam shape may be provided. In this manner, the phase of the light beams in the plurality of single-mode waveguides may be adjusted such that resulting nearfield beam shape of the output light beam may be changed. This, in turn, allows the nearfield beam shape to be changed depending on the applications in which the device is being used. Thus, a versatile nearfield beam shaping device may be provided.

A specific advantage for quantum computing is that this embodiment enables dynamic control of the trapped ions, allowing adjustment of the nearfield beam profile to enhance trapping efficiency. Furthermore, this embodiment supports the controlled relocation of ions, thus allowing for the fine-tuning of their interactions.

According to an embodiment, each of the plurality of optical gates is configured to provide dynamic control of the amplitude of the portion of the light beam in the respective single-mode waveguide.

According to an embodiment, each optical gate of the plurality of optical gates comprises a dynamic phase shifter.

By way of example, a dynamic phase shifter may be provided by means of an electro-optic element in the optical path through the optical gate. The electro-optic element may be made of a material with strong electro-optic effect such that when an electric field is applied to the electro-optic element, an optical property of the material may change. By way of example, when applying an electric field to the electro-optic element, a thickness, a refractive index, and/or an optical path length through the electro-optic element may be changed. By the present arrangement, a variable optical path length in the optical path may be provided. By varying the applied electric field, the optical path length through the phase shifter is changed, thereby changing the phase of the light exiting the phase shifter.

An advantage with this embodiment is that a simple yet easily controllable implementation of a phase shifter may be provided.

Another advantage is that it allows for integration into a photonic integrated circuit, providing a compact device.

According to an embodiment, the mode transformer comprises a mode division multiplexer, MDM.

By the term "mode division multiplexer" is here meant any waveguide and/or fiber capable of guiding a plurality of optical modes independently of one another in one core.

According to an embodiment, the multimode waveguide has a cross-sectional width expanding along a light propagation direction.

By using a multimode waveguide whose cross-sectional width expands along the light propagation direction, the multimode waveguide may accommodate increasingly more and more modes along the light propagation direction. The mode transformer inputs may be distributed along the light propagation direction, i.e. along an extension of the multimode waveguide. By this arrangement, the plurality of modes in the multimode waveguide may be sequentially excited by the portions of the light beam in the single-mode waveguides. Thus, the multimode waveguide may have an increasingly large cross-sectional width as more and more modes are excited along the multimode waveguide.

According to an embodiment, the plurality of optical gates is configured to control the phase of the light beam in the respective single-mode waveguides such that the plurality of modes in the multimode waveguide jointly provide an at least approximately flat-top nearfield beam shape.

In the present disclosure the terms "flat-top", "flat-hat", and "top-hat" may be used interchangeably, as they are all considered to be known and used in the art and having the same meaning. By the term "flat-top" and the related terms is here meant a spatial power/intensity profile that at a first profile edge rises quickly from a low level, typically from a zero power/intensity level, up to higher level, clearly distinguishable from the lower level, and remains at substantially this higher level across the profile until a second profile edge, opposite to the first profile edge, at which the power/intensity decreases quickly from the higher level to the lower level.

It should be realized that, although the term "flat-top" implies that the top of the profile is flat, the higher-level portion of the profile is not necessarily perfectly flat, i.e. on the exact same level across the profile. In a practical beam profile, there is typically smaller variation of the power/intensity in space across the profile as well as in time. However, the variations within the higher level may be smaller than the difference between the higher and lower levels. In other words, the higher level may not fluctuate such that it reaches down to the lower level. Typically, the fluctuations are smaller than half of the difference between the higher and lower levels. In this manner, the higher and lower levels may be clearly distinguished from one another.

An advantage with this embodiment is that a more uniform illumination may be provided by the nearfield beam shaping device, already in the nearfield. A uniform illumination is important in a vast number of applications. By way of example, in on-chip flow cytometry and biosensing applications, maintaining a stable particle stream in the center of the channel, as required when illuminated by a Gaussian beam, poses significant difficulties. Deviation in particle position leads to substantial fluctuations in collected signals. This, in turn, introduces uncertainties in particle differentiation, and reduces the purity during e.g. sorting applications. The use of a flat-hat beam profile according to the present embodiment, however, may ensure robust performance despite variations in particle stream position.

According to an embodiment, the nearfield beam shaping device is provided in the form of a photonic integrated circuit, PIC.

Thus, the desired nearfield beam shape of the output light beam may be provided by the photonic integrated circuit.

An advantage with this embodiment is that a more compact and robust nearfield beam shaping device may be provided, that enables stable control of phase of the portions of the light beam in the single-mode waveguides and thus stable control of the nearfield beam shape of the output light beam.

Another advantage is that this allows for the device to be used in applications in which PIC are typically used.

According to a second aspect there is provided a nearfield beam shaping device comprising:

a mode transformer comprising:

a mode transformer input configured to receive a light beam;
a multimode waveguide configured to propagate the light beam in a plurality of modes, wherein each mode of the plurality of modes is a spatial mode;
a plurality of mode transformer outputs, each mode transformer output of the plurality of mode transformer outputs being coupled to the multimode waveguide and configured to outcouple light of a respective mode of the plurality of modes from the multimode waveguide; and

a linear transformer comprising:

a plurality of single-mode waveguides, each single-mode waveguide of the plurality of waveguides being connected to a respective mode transformer output of the mode transformer, for coupling light of the respective mode from the multimode waveguide to the single-mode waveguide, whereby a power of the light beam is distributed into a plurality of portions of the light beam, each portion of the plurality of portions of the light beam being distributed to a respective single-mode waveguide;
a plurality of optical gates configured to provide control of phase of each respective portion of the light beam in the respective single-mode waveguide, and to combine the plurality of portions of the light beam in the plurality of single-mode waveguides into an output light beam.

It should be understood that the device according to the second aspect may be arranged in exactly the same manner as the device according to the first aspect. Phrased differently, the device according to the first and second aspects may be the same device. The difference is that in the device according to the second aspect the light beam travels in the reverse direction as compared to the device according to the first aspect. Thus, the device allows reciprocal operation, with respect to the light direction.

Because of the fact that the light beam travels in the reverse direction in the device according to the second aspect, some of the components have partially different functions, and have therefore been given different names as compared to the names in the description of the first aspect.

It should be realized that the mode transformer input of the device according to the second aspect corresponds to the mode transformer output of the device according to the first aspect.

Further, it should be realized that the plurality of mode transformer outputs of the device according to the second aspect correspond to the plurality of mode transformer inputs of the device according to the first aspect. Each of the plurality of mode transformer outputs of the device according to the second aspect may be configured to selectively couple a specific mode of the plurality of modes out of the multimode waveguide into a respective single-mode waveguide.

Further, it should be realized that the linear transformer input of the device according to the first aspect may output the output light beam of the device according to the second aspect. Therefore, the linear transformer input of the device according to the first aspect may correspond to a linear transformer output of the device according to the second aspect. However, it should also be realized that the output light beam at a linear transformer output is not necessarily coupled out. By way of example, in case the device is provided in the form of a photonic integrated circuit, the output light beam at the linear transformer output may instead be guided to other parts of the photonics circuit for further processing or application.

Nevertheless, what is described in relation to the device according to the first aspect is also largely valid for the device according to the second aspect.

Given as a non-limiting example, the device according to the second aspect may be used for providing misalignment tolerant fiber-chip couplers. After packaging of fibers to a photonic chip, the fibers are fixed in place and the device may be used to correct for alignment errors. Correction may be provided by displacing the nearfield beam shape on the photonics chip. It may be described as shaping the nearfield beam to match the location of the fiber ends. In this context the nearfield beam shaping device may be referred to as a multimode and/or misalignment-tolerant coupler.

Given that the device according to the second aspect is in a sense the same as the device according to the first aspect, it should be understood that the device can be defined generically, regardless of in what direction the light travels in the device.

In other words, there is provided a nearfield beam shaping device comprising:

a linear transformer comprising:

a linear transformer interface configured to relay light;
a plurality of optical gates;
a plurality of single-mode waveguides;

wherein the plurality of optical gates is configured to relay light between the linear transformer interface and the plurality of single-mode waveguides, and wherein the plurality of optical gates is further configured to provide control of phase of each respective portion of the light passing the respective optical gate;
a mode transformer comprising:

a plurality of mode transformer ports, each mode transformer port of the plurality of mode transformer ports being connected to a respective single-mode waveguide of the plurality of single-mode waveguides;
a multimode waveguide configured to propagate light in a plurality of modes, wherein each mode of the plurality of modes is a spatial mode, and wherein the plurality of mode transformer ports is coupled to the multimode waveguide for relaying light between the multimode waveguide and the respective single-mode waveguides; and
a mode transformer interface configured to relay light of the plurality of modes;

wherein the nearfield beam shaping device is configured to control, based on at least the control of the phase of each portion of the light passing the respective optical gate, a relationship between the plurality of modes, for controlling a relationship between a nearfield beam shape at the linear transformer interface and a nearfield beam shape at the mode transformer interface.

According to a third aspect there is provided a method for shaping a nearfield of a light beam, the method comprising:

receiving, at a linear transformer input of a linear transformer, the light beam;
distributing, by a plurality of optical gates, a power of the light beam into a plurality of portions of the light beam, each portion of the plurality of portions of the light beam being distributed to a respective single-mode waveguide of a plurality of single-mode waveguides, wherein the plurality of optical gates is configured to provide control of phase of each respective portion of the light beam in the respective single-mode waveguide;
exciting a plurality of modes in a multimode waveguide of a mode transformer, wherein each mode of the plurality of modes is a spatial mode, said mode transformer having a plurality of mode transformer inputs, each mode transformer input of the plurality of mode transformer inputs being connected to a respective single-mode waveguide of the plurality of single-mode waveguides, and wherein the plurality of mode transformer inputs is coupled to the multimode waveguide;
outcoupling, by a mode transformer output, the plurality of modes from the mode transformer
controlling, based on at least the control of the phase of each portion of the light beam in the respective single-mode waveguide, a relationship between the phases of the plurality of modes in the multimode waveguide for controlling a nearfield beam shape of an output light beam based on the plurality of modes outcoupled from the mode transformer.

According to a fourth aspect there is provided a method for shaping a nearfield of a light beam, the method comprising:

receiving, at a mode transformer input of a mode transformer, a light beam;
propagating, in a multimode waveguide of the mode transformer, the light beam in a plurality of modes, wherein each mode of the plurality of modes is a spatial mode;
outcoupling light of a respective mode of the plurality of modes from the multimode waveguide, at a plurality of mode transformer outputs, each mode transformer output of the plurality of mode transformer outputs being coupled to the multimode waveguide;
coupling light of the respective mode from the multimode waveguide to a single-mode waveguide of a plurality of single-mode waveguides of a linear transformer, each single-mode waveguide of the plurality of waveguides being connected to a respective mode transformer output of the mode transformer, whereby a power of the light beam is distributed into a plurality of portions of the light beam, each portion of the plurality of portions of the light beam being distributed to the respective single-mode waveguide;
providing control, by a plurality of optical gates, of phase of each respective portion of the light beam in the respective single-mode waveguide;
combining, by a plurality of optical gates, the plurality of portions of the light beam in the plurality of single-mode waveguides into an output light beam.

Effects and features of the second, third, and fourth aspects are largely analogous to those described above in connection with the first aspect. Embodiments mentioned in relation to the first aspect are largely compatible with the second, third, and fourth aspects. It is further noted that the disclosure relates to all possible combinations of features unless explicitly stated otherwise.

Other objectives, features and advantages of the present disclosure will appear from the following detailed description, from the attached claims as well as from the drawings.

Brief descriptions of the drawings

The above, as well as additional objects, features and advantages of the present disclosure, will be better understood through the following illustrative and non-limiting detailed description, with reference to the appended drawings. In the drawings like reference numerals will be used for like elements unless stated otherwise.

Fig. 1 schematically illustrates a nearfield beam shaping device comprising a linear transformer, a mode transformer and an optional outcoupler.
Figs 2A-2C schematically illustrate three different variants of how an optical gate may be configured.
Fig. 3 schematically illustrates the concept of the nearfield beam shaping.
Fig. 4 illustrates a schematic block diagram shortly summarizing a method for shaping a nearfield of a light beam.
Fig. 5 illustrates a schematic block diagram shortly summarizing another method for shaping a nearfield of a light beam.

Detailed description

In cooperation with attached drawings, the technical contents and detailed description of the present inventive concept are described thereinafter according to a preferable embodiment, being not used to limit the claimed scope. This inventive concept may be embodied in many different forms and should not be construed as limited to the embodiments set forth herein; rather, these embodiments are provided for thoroughness and completeness, and fully convey the scope of the inventive concept to the skilled person.

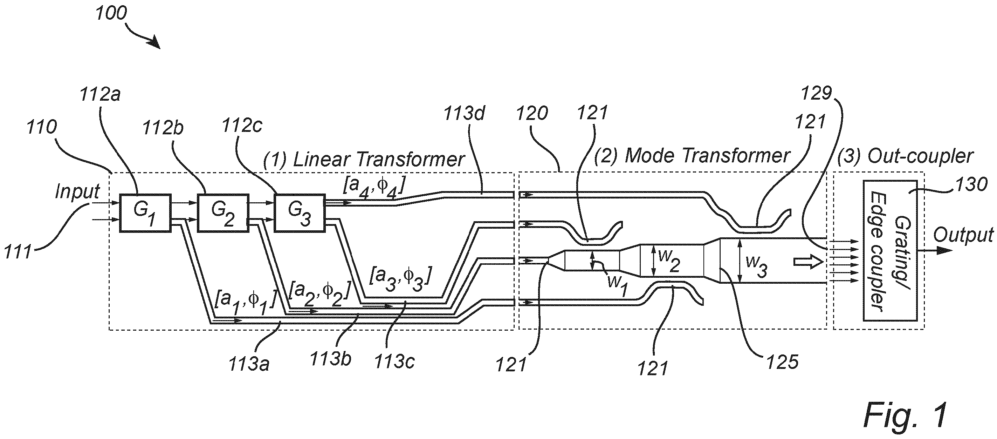

Fig. 1 schematically illustrates a nearfield beam shaping device 100. The nearfield beam shaping device 100 may be configured to receive a light beam at an input 111. The nearfield beam shaping device 100 may be further configured to re-shape an incoming light beam, having for example a cross-sectional beam profile with a Gaussian shape, into a desired cross-sectional beam shape in the nearfield of an output 129.

The nearfield beam shaping device 100 comprises a linear transformer 110. The linear transformer 110 comprises a linear transformer input 111 configured to receive the light beam.

The nearfield beam shaping device 100 further comprises a plurality of optical gates 112. In a general case, the device 100 may comprise $N$ optical gates, and in the present example three optical gates 112. In the present example, each of the optical gates 112 may comprise two ports for receiving input light and two ports for transmitting output light. The light beam received at the linear transformer input 111 may be provided to an input port of a first optical gate 112a. The first optical gate 112a may be configured to distribute the light beam such that a first portion of the light beam is provided to one of the output ports of the first optical gate 112a. In this manner, the first portion of the light beam may be distributed into a first single-mode waveguide 113a of a plurality of single-mode waveguides 113. Further, the first optical gate is configured to provide control of phase of the first portion of the light beam passing the first optical gate. By way of example, the first optical gate may provide control of the phase by comprising a phase shifter. The phase shifter may be static or dynamic.

The remainder of the light beam may be provided to the other one of the output ports of the first optical gate 112a, and guided to an input port of the second optical gate 112b. The procedure may be repeated in the second optical gate 112b and the third optical gate 112c such that the light beam has passed all of the $N$ optical gates 112, being distributed into $N + 1$ portions provided to $N + 1$ single-mode waveguides 113, in the present example four single-mode waveguides 113. Thus, the light beam received at the linear transformer input 111 may be guided sequentially through each of the optical gates 112, splitting the respective portions of the light beam into the respective single-mode waveguides 113. By the present arrangement, the power of the light beam is distributed into portions of the light beam, distributed into the single-mode waveguides 113, where each respective portion of the light beam in the respective single-mode waveguide 113 has a phase ($\phi_n$, $n = 1, 2, ..., N + 1$) controlled by the respective optical gate 112.

In the present example, the optical gates 112 may optionally be configured to provide control of also the amplitude ($a_n$, $n = 1, 2, ..., N + 1$) of each respective portion of the light beam in the respective single-mode waveguide 113.

In the present example, the amplitudes and phases of the light in the four waveguides are denoted $[a_1, \phi_1]$, $[a_2, \phi_2]$, $[a_3, \phi_3]$, $[a_4, \phi_4]$ respectively. These parameters may represent the complex Fourier coefficients of the desired nearfield beam shape. Thus, these parameters may be determined from the desired nearfield beam shape, after which the optical gates may be configured to provide these parameters, in order for the device 100 to provide the desired nearfield beam shape of the output light beam.

It serves to mention that the device 100 is by no means limited to having three optical gates and four single-mode waveguides. The device may alternatively comprise fewer or more optical gates and single-mode waveguides. It should be understood that the number of optical gates and single-mode waveguides may be much larger than illustrated in the present example.

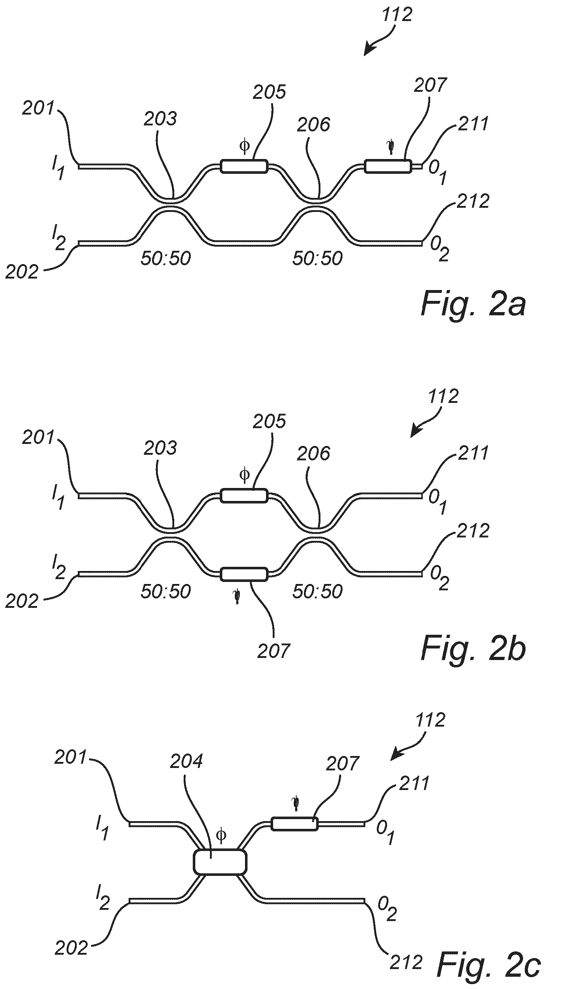

Further details of the optical gates 112 will be provided in connection with Fig. 2.

The nearfield beam shaping device 100 further comprises a mode transformer 120. The mode transformer 120 comprises a plurality of mode transformer inputs 121. In a general case, the device 100 may comprise $N + 1$ mode transformer inputs, and in the present example four mode transformer inputs 121. Each mode transformer input 121 is connected to a respective single-mode waveguide 113. By the present arrangement, the mode transformer 120 may receive the portions of the light beam propagating in the single-mode waveguides 113.

The mode transformer 120 further comprises a multimode waveguide 125. The plurality of mode transformer inputs 121 are coupled to the multimode waveguide 125. In this manner, the portions of the light beam propagating in the single-mode waveguides 113 may each excite a mode in the multimode waveguide 125. Typically, light from different single-mode waveguides 113 excites different spatial modes in the multimode waveguide 125, such that a plurality of modes ($N + 1$) are excited in the multimode waveguide 125.

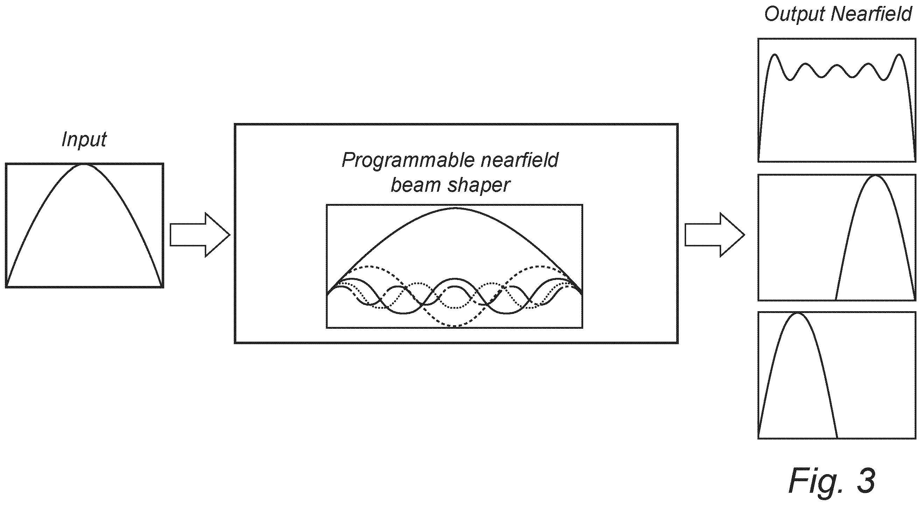

The desired nearfield beam shape profile may be expanded into a Fourier series, from which the complex Fourier coefficients may be determined, and the optical gates may be configured to provide these coefficients. In this manner, the higher order modes excited in the multimode waveguide 125 by the portions of light in the respective single-mode waveguides 113 are equivalent to the frequencies of Fourier series. This will be discussed further in connection with Fig. 3.

As illustrated in Fig. 1, the multimode waveguide 125 may have a cross-sectional width that expands along a light propagation direction. In the present example, the cross-sectional width of the multimode waveguide 125 expands stepwise, once for each mode transformer input 121. In this manner, the multimode waveguide 125 may have a cross-sectional width suitable for the number of modes propagating in each section of the multimode waveguide 125.

Given as a non-limiting example, the mode transformer 120 may comprise a mode division multiplexer, MDM. However, it should be understood that the mode transformer 120 may alternatively comprise any other suitable type of multimode waveguide.

The plurality of modes excited in the multimode waveguide 125 propagate to reach a mode transformer output 129. At the mode transformer output 129 the plurality of modes may be outcoupled from the mode transformer 125. The combination of the plurality of modes may interfere to form an output light beam with a nearfield beam shape being dependent on the sum of the plurality of modes.

Thus, by controlling the phase of each portion of the light beam in the respective single-mode waveguide 113, and optionally also the respective amplitude, by means of the optical gates 112, the relationship between the plurality of modes in the multimode waveguide 125 may be controlled so that the plurality of modes outcoupled from the mode transformer 125 form an output light beam having the desired nearfield beam shape.

As illustrated in Fig. 1, the nearfield beam shaping device 100 may further comprise and optional outcoupler 130. The outcoupler 130 may be arranged at the mode transformer output 129. The outcoupler 130 may thus receive the plurality of modes being output from the mode transformer output 129. The outcoupler 130 may be configured to transmit the output light beam based on the received plurality of modes from the outcoupler 130. By the present arrangement, the nearfield beam shape of the output light beam may be controlled to have the desired beam shape.

By way of example, the outcoupler 130 may be configured to output the output light beam at the same propagation direction as received from the mode transformer output 129. However, it is conceivable that the outcoupler 130 may alternatively be configured to change the direction of the output light beam with respect to the direction of the received light. By way of example, the outcoupler 130 may be configured to output the output light beam perpendicularly with respect to the direction of the light received from the mode transformer output 129.

Given as non-limiting examples, the outcoupler 130 may be provided as a grating coupler or as an edge coupler.

The nearfield beam shaping device 100 may be provided in the form of a photonic integrated circuit, PIC. As such, the nearfield beam shaping device may be used in application in which photonic integrated circuits are otherwise used. By way of example, the nearfield beam shaping device 100 may be used in applications for on-chip flow cytometry or biosensing, dynamic ion-trapping used in quantum computing, and/or post-packaging alignment of optical fibers with photonic circuits. It should be realized that the nearfield beam shaping device may form part of a system for any such application.

Figs 2A-2C schematically illustrate three different variants of how an optical gate 112 may be configured. In all three variants, the optical gate 112 may comprise two input ports 201, 202 for receiving input light and two output ports 211, 212 for transmitting output light. The input light received at the two input ports 201, 202 are denoted $I_1$ and $I_2$, respectively. The output light transmitted at the two output ports 211, 212 are denoted $O_1$ and $O_2$, respectively.

Fig. 2A schematically illustrates a first variant of how an optical gate 112 may be configured. Here, the light beams $I_1$ and $I_2$ received at the first and second input ports 201, 202 may be combined by means of a first 50:50 optical combiner 203. Upon combination, the light from the two input ports 201, 202 may interfere with one another. The combination is subsequently split up into two paths, as for example two separate waveguide arms. One of the arms may be provided with a phase shifter 205. If an electric field is applied across the phase shifter 205, the optical path length through the arm may change. In this manner a phase shift $\phi$ for the light passing through that arm may be provided. Subsequently, the light in the two arms may be combined again in a second 50:50 optical combiner 206. The combination may again be split up into two arms. One of the arms may optionally be provided with an amplitude controller 207, configured to control the amplitude $\psi$ of the light in that arm. The light $O_1$ and $O_2$ in the two arms may subsequently be output through the first and second output ports 211, 212 of the optical gate 112.

The light output at the first and second output ports 211, 212 may be expressed as:

$$\begin{bmatrix} O_1 \\ O_2 \end{bmatrix} = -je^{-j\frac{\phi}{2}} \begin{bmatrix} e^{-j\psi}\sin\left(\frac{\phi}{2}\right) & e^{-j\psi}\cos\left(\frac{\phi}{2}\right) \\ \cos\left(\frac{\phi}{2}\right) & -\sin\left(\frac{\phi}{2}\right) \end{bmatrix} \begin{bmatrix} I_1 \\ I_2 \end{bmatrix}$$

The light output from one of the first and the second output ports 211, 212 may be provided to a single-mode waveguide, whereas the light output from the other output port may be provided to another optical gate. In the manner described above, an optical gate 112 may be provided, having dynamic control of the phase of the portion of the light beam provided to the single-mode waveguide. It should be understood, however, that a static control of the phase may alternatively be provided in a similar manner.

Fig. 2B schematically illustrates a second variant of how an optical gate 112 may be configured. Similarly to the first variant, the light beams $I_1$ and $I_2$ received at the first and second input ports 201, 202 may be combined by means of a first 50:50 optical combiner 203. The combination is subsequently split up into two paths, as for example two separate waveguide arms. One of the arms may be provided with a phase shifter 205, that may provide a phase shift $\phi$ of the light passing through that arm. The other arm may optionally be provided with an amplitude controller 207, configured to control the amplitude $\psi$ of the light in that arm. Subsequently, the light in the two arms may be combined again in a second 50:50 optical combiner 206. The combination may again be split up into two arms. The light $O_1$ and $O_2$ in the two arms may subsequently be output through the first and second output ports 211, 212 of the optical gate 112.

Fig. 2C schematically illustrates a third variant of how an optical gate 112 may be configured. The light beams $I_1$ and $I_2$ received at the first and second input ports 201, 202 may be combined by means of an optical combiner 204. The optical combiner may comprise also a phase shifter, which may provide a phase shift $\phi$ of the light passing through the optical combiner 204. The combined and phase shifted light may subsequently be split up into two paths, as for example two separate waveguide arms. One of the arms may optionally be provided with an amplitude controller 207, configured to control the amplitude $\psi$ of the light in that arm. The light $O_1$ and $O_2$ in the two arms may subsequently be output through the first and second output ports 211, 212 of the optical gate 112.

It should be realized that by using any of the above described variants of the optical gate 112, a sequence of a plurality of optical gates may be provided, allowing control of phase, and optionally amplitude, of the portions of the light beam in the plurality of single-mode waveguides such that they may correspond to the complex Fourier coefficients of the Fourier series of the desired nearfield beam shape.

Fig. 3 schematically illustrates the concept of the nearfield beam shaping.

As previously mentioned, the Fourier series of the desired nearfield beach shape of the output beam may be calculated. The Fourier series may be expressed in sine-cosine form or, as is preferred in the present disclosure, in exponential form. From the calculated Fourier series, the complex Fourier coefficients ($a_n$, $\phi_n$, $n = 1, 2, ..., N + 1$) may be determined.

As described in connection with Figs 2A-2C, the power of the input beam, which typically may have a Gaussian shape in integrated waveguides, may be distributed by means of the plurality of optical gates into a plurality of single-mode waveguides. An input light beam of a Gaussian shape is schematically illustrated to the left of Fig. 3. The optical gates provide control of the phase, and optionally the amplitude, of each portion of the light beam provided to the respective single-mode waveguide. In this manner the different portions of the light beam in the plurality of single-mode waveguides may represent the complex Fourier coefficients of the calculated Fourier series.

When these portions of the light beam in the single-mode waveguides are coupled to the multimode waveguide of the mode transformer, these portions excite their respective spatial mode of the Fourier series in the multimode waveguide. Once all the respective portions of the light have excited a respective mode in the multimode waveguide, the plurality of modes in the multimode waveguide correspond to the spatial modes, i.e. the spatial power distribution of the light, of the Fourier series of the desired nearfield beam shape of the output light beam. Each mode spatially varies in power across the multimode waveguide, following a Sine or Cosine function. These frequencies are schematically illustrated in the center of Fig. 3. The Fourier series in exponential form may be expressed as:

$$\sum_{n=1}^{N+1} a_n \cdot e^{j\phi_n} \cdot \psi_n(x, y)$$

When these modes are combined at the mode transformer output, they interfere and form an output beam of the desired beam shape.

In case dynamic phase and amplitude control is provided to the optical gates, the nearfield beam shaping device may not only generate one specific output nearfield beam shape for a given input light beam, but may further provide a programmable nearfield beam shape. Since the phase and amplitude control may be dynamically changed, the optical gates may be programmed to provide portions of light corresponding to different complex Fourier coefficients, and thus the nearfield beam shape of the output light beam may be dynamically changed, depending on the needs for different applications.

By way of example, in case a flat-top, or near flat-top nearfield beam shape is desired, such a shape may be expanded into a Fourier series, and the corresponding Fourier coefficients may be programmed into the optical gates. In this manner, the plurality of optical gates may control the phase of the light beam in the respective single-mode waveguides such that the plurality of modes in the multimode waveguide jointly provide an at least approximately flat-top nearfield beam shape. An example of such a nearfield beam shape is schematically illustrated in the top right of Fig. 3.

However, it should be realized that the nearfield beam shaping device is by no means limited to generating flat-top beam shapes. Any other desired beam shape may be generated, provided that the shape may be expanded into a Fourier series. By way of example, the nearfield beam shaping device may be configured to provide beam focusing and/or beam translation properties. Examples of a Gaussian beam being focused to a narrower width and translated to the right or to the left, are provided at the center right and bottom right of Fig. 3.

As previously mentioned, the nearfield beam shaping device 100 allows reciprocal operation, with respect to the light direction. Phrased differently, the light beam may travel in the reverse direction as compared to what was earlier described in connection with Fig. 1. In case the light beam travels in the reverse direction in the device, some of the components have partially different functions, and may therefore be given different names as compared to the names in the previous description in connection with Fig. 1.

Returning now to Fig. 1, the nearfield beam shaping device 100 will now be described for the case of reverse light beam propagation through the device 100.

The nearfield beam shaping device 100 comprises a mode transformer 120. The mode transformer 120 comprises a mode transformer input 129 configured to receive a light beam. Note that the nearfield beam shaping device 100 of Fig. 1 further comprises an optional incoupler 130 configured to receive the light beam and couple the light beam into the mode transformer 120 via the mode transformer input 129. However, it should be understood that in the nearfield beam shaping device 100 the incoupler 130 may alternatively be omitted, and the light beam may for example be received directly at the mode transformer input 129.

The mode transformer 120 further comprises a multimode waveguide 125. The multimode waveguide 125 is configured to propagate the light beam in a plurality of spatial modes inside the multimode waveguide 125.

The mode transformer 120 further comprises a plurality of mode transformer outputs 121. Each mode transformer output 121 may be coupled to the multimode waveguide 125. Each mode transformer output 121 may be configured to outcouple light of a respective mode of the plurality of modes from the multimode waveguide 125. In the present example, light of four respective modes is outcoupled from the multimode waveguide 125, one mode by each respective mode transformer output 121.

As illustrated in Fig. 1, the multimode waveguide 125 may have a cross-sectional width that may be tapered along a light propagation direction. In the present example, the cross-sectional width of the multimode waveguide 125 is stepwise tapered, once for each mode transformer output 121. In this manner, the multimode waveguide 125 may have a cross-sectional width suitable for the number of modes propagating in each section of the multimode waveguide 125.

The nearfield beam shaping device 100 further comprises a linear transformer 110. The linear transformer 110 comprises a plurality of single-mode waveguides 113, and in the present example four single-mode waveguides 113. Each single-mode waveguide 113 is connected to a respective mode transformer output 121. By this arrangement, light of the respective mode from the multimode waveguide 125 may be coupled to the respective single-mode waveguide 113. Thus, the power of the light beam may be distributed into a plurality of portions of the light beam, each portion being distributed to a respective single-mode waveguide 113.

The linear transformer 110 further comprises a plurality of optical gates 112, and in the present example three optical gates 112. In the present example, each of the optical gates 112 may comprise two ports for receiving input light and two ports for transmitting output light. The portions of the light beam of two of the single-mode waveguides 113c, 113d may be provided to the respective input ports of one of the optical gates 112c. In the optical gate the two portions may be combined and guided to an input port of a second optical gate 112b. The other one of the input ports of the optical gate 112b may be provided with the portion of the light beam of another single-mode waveguide 113b, where the light is again mixed. The procedure may be repeated in the remaining optical gate 112a such that the portions of the light beam in all single-mode waveguides 113 are combined into an output beam. Moreover, the plurality of optical gates 112 are configured to provide control of phase of each respective portion of the light beam in the respective single-mode waveguide 113. Phrased differently, the plurality of optical gates 112 may be configured to provide control of phase of each respective portion of the light passing the respective optical gate 112. By the present arrangement, the phase of the different portions of the light beam may be changed in the respective optical gates 112. In this manner, the nearfield beam shape of the output beam may be controlled.

The nearfield beam shaping device 100 of Fig. 1 may comprise a linear transformer output 111. The linear transformer output 111 may be configured to outcouple the output light beam. However, it should also be realized that the output light beam at the linear transformer output 111 is not necessarily coupled out. By way of example, in case the device is provided in the form of a photonic integrated circuit, the output light beam at the linear transformer output 111 may instead be guided to other parts of the photonics circuit for further processing or application.

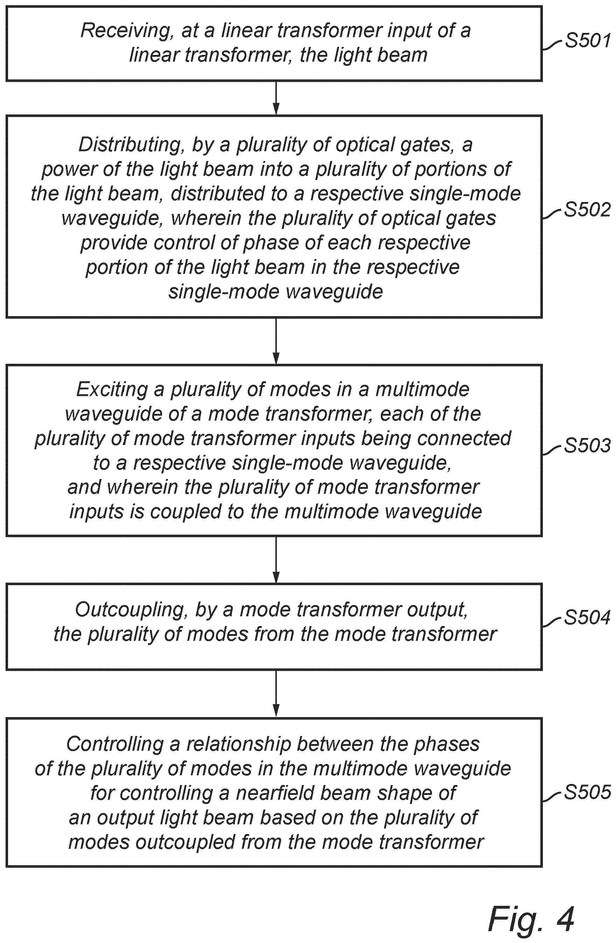

Fig. 4 illustrates a schematic block diagram shortly summarizing a method for shaping a nearfield of a light beam. It should be understood that the steps of the method, although listed in a specific order herein, may be performed in any order suitable.

The method may comprise receiving S501, at a linear transformer input of a linear transformer, the light beam.

The method may comprise distributing S502, by a plurality of optical gates, a power of the light beam into a plurality of portions of the light beam. Each portion of the plurality of portions of the light beam may be distributed to a respective single-mode waveguide of a plurality of single-mode waveguides. The plurality of optical gates may be configured to provide control of phase of each respective portion of the light beam in the respective single-mode waveguide.

The method may comprise exciting S503 a plurality of modes in a multimode waveguide of a mode transformer. Each mode of the plurality of modes is a spatial mode. Said mode transformer may have a plurality of mode transformer inputs. Each mode transformer input of the plurality of mode transformer inputs may be connected to a respective single-mode waveguide of the plurality of single-mode waveguides. The plurality of mode transformer inputs may be coupled to the multimode waveguide.

The method may comprise outcoupling S504, by a mode transformer output, the plurality of modes from the mode transformer.

The method may comprise controlling S505, based on at least the control of the phase of each portion of the light beam in the respective single-mode waveguide, a relationship between the phases of the plurality of modes in the multimode waveguide for controlling a nearfield beam shape of an output light beam based on the plurality of modes outcoupled from the mode transformer.

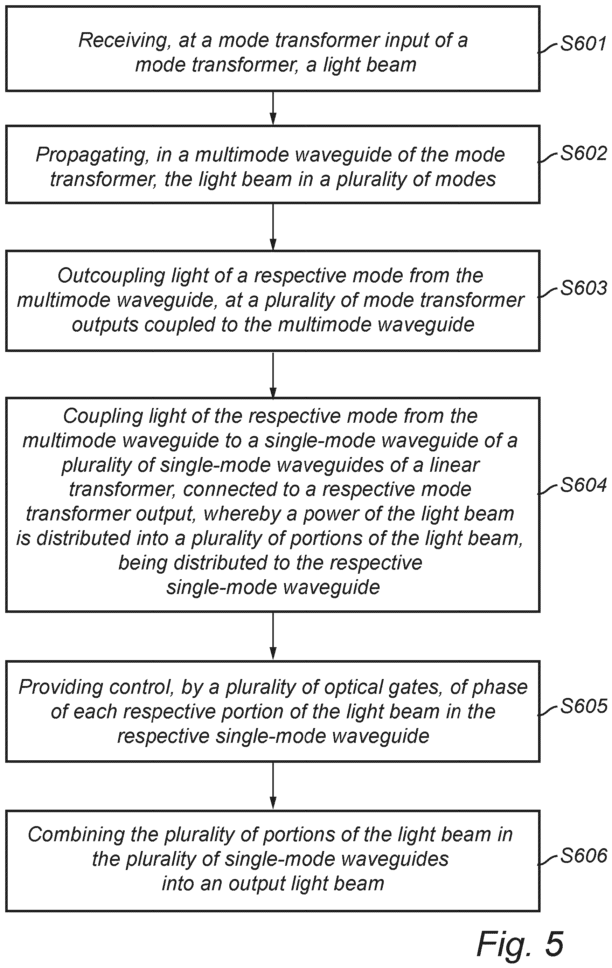

Fig. 5 illustrates a schematic block diagram shortly summarizing another method for shaping a nearfield of a light beam. It should be understood that the steps of the method, although listed in a specific order herein, may be performed in any order suitable.

The method may comprise receiving S601, at a mode transformer input of a mode transformer, a light beam.

The method may comprise propagating S602, in a multimode waveguide of the mode transformer, the light beam in a plurality of modes. Each mode of the plurality of modes is a spatial mode.

The method may comprise outcoupling S603 light of a respective mode of the plurality of modes from the multimode waveguide, at a plurality of mode transformer outputs. Each mode transformer output of the plurality of mode transformer outputs may be coupled to the multimode waveguide.

The method may comprise coupling S604 light of the respective mode from the multimode waveguide to a single-mode waveguide of a plurality of single-mode waveguides of a linear transformer. Each single-mode waveguide of the plurality of waveguides may be connected to a respective mode transformer output of the mode transformer, whereby a power of the light beam is distributed into a plurality of portions of the light beam. Each portion of the plurality of portions of the light beam may be distributed to the respective single-mode waveguide.

The method may comprise providing S605 control, by a plurality of optical gates, of phase of each respective portion of the light beam in the respective single-mode waveguide.

The method may comprise combining S606, by a plurality of optical gates, the plurality of portions of the light beam in the plurality of single-mode waveguides into an output light beam.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. A nearfield beam shaping device (100) comprising:

a linear transformer (110) comprising:

a linear transformer input (111) configured to receive a light beam;
a plurality of optical gates (112);
a plurality of single-mode waveguides (113);
wherein the plurality of optical gates (112) is configured to distribute a power of the light beam into a plurality of portions of the light beam, each portion of the plurality of portions of the light beam being distributed to a respective single-mode waveguide (113) of the plurality of single-mode waveguides (113), and wherein the plurality of optical gates (112) is further configured to provide control of phase of each respective portion of the light beam in the respective single-mode waveguide (113);

a mode transformer (120) comprising:

a plurality of mode transformer inputs (121), each mode transformer input (121) of the plurality of mode transformer inputs (121) being connected to a respective single-mode waveguide (113) of the plurality of single-mode waveguides (113);
a multimode waveguide (125), wherein the plurality of mode transformer inputs (121) are coupled to the multimode waveguide (125) for exciting a plurality of modes in the multimode waveguide (125), wherein each mode of the plurality of modes is a spatial mode; and
a mode transformer output (129) configured to outcouple the plurality of modes from the mode transformer;

wherein the nearfield beam shaping device (100) is configured to control, based on at least the control of the phase of each portion of the light beam in the respective single-mode waveguide, a relationship between the plurality of modes in the multimode waveguide (125) for controlling a nearfield beam shape of an output light beam based on the plurality of modes outcoupled from the mode transformer.

2. The nearfield beam shaping device (100) according to claim 1, further comprising:

an outcoupler (130) configured to receive the plurality of modes from the mode transformer output (129), and to transmit the output light beam based on the received plurality of modes from the outcoupler (130);
wherein the nearfield beam shaping device (100) is configured to control the relationship between the plurality of modes in the multimode waveguide (125), thereby controlling the nearfield beam shape of the output light beam.

3. The nearfield beam shaping device (100) according to claim 2, wherein the outcoupler (130) comprises at least one of a grating coupler or an edge coupler.

4. The nearfield beam shaping device (100) according to any one of the preceding claims, wherein the linear transformer (110) is configured to propagate the light beam received at the linear transformer input (111) sequentially through each optical gate (112) of the plurality of optical gates (112), and wherein each optical gate (112) is configured to split the respective portion of the light beam into the respective single-mode waveguide (113) of the plurality of single-mode waveguides (113).

5. The nearfield beam shaping device (100) according to any one of the preceding claims, wherein each optical gate (112) of the plurality of optical gates (112) comprises a Mach-Zehnder Interferometer, MZI.

6. The nearfield beam shaping device (100) according to any one of the preceding claims, wherein the plurality of optical gates (112) is further configured to provide control of amplitude of each respective portion of the light beam in the respective single-mode waveguide (113).

7. The nearfield beam shaping device (100) according to any one of the preceding claims, wherein each of the plurality of optical gates (112) is configured to provide dynamic control of the phase of the portion of the light beam in the respective single-mode waveguide (113).

8. The nearfield beam shaping device (100) according to claim 7, wherein each optical gate (112) of the plurality of optical gates (112) comprises a dynamic phase shifter.

9. The nearfield beam shaping device (100) according to any one of the preceding claims, wherein the mode transformer (120) comprises a mode division multiplexer, MOM.

10. The nearfield beam shaping device (100) according to any one of the preceding claims, wherein the multimode waveguide (125) has a cross-sectional width expanding along a light propagation direction.

11. The nearfield beam shaping device (100) according to any one of the preceding claims, wherein the plurality of optical gates (112) is configured to control the phase of the light beam in the respective single-mode waveguides (113) such that the plurality of modes in the multimode waveguide (125) jointly provide an at least approximately flat-top nearfield beam shape.

12. The nearfield beam shaping device (100) according to any one of the preceding claims, being provided in the form of a photonic integrated circuit, PIC.

13. A nearfield beam shaping device comprising:

a mode transformer comprising:

a mode transformer input configured to receive a light beam;
a multimode waveguide configured to propagate the light beam in a plurality of modes, wherein each mode of the plurality of modes is a spatial mode;
a plurality of mode transformer outputs, each mode transformer output of the plurality of mode transformer outputs being coupled to the multimode waveguide and configured to outcouple light of a respective mode of the plurality of modes from the multimode waveguide; and

a linear transformer comprising:

a plurality of single-mode waveguides, each single-mode waveguide of the plurality of waveguides being connected to a respective mode transformer output of the mode transformer, for coupling light of the respective mode from the multimode waveguide to the single-mode waveguide, whereby a power of the light beam is distributed into a plurality of portions of the light beam, each portion of the plurality of portions of the light beam being distributed to a respective single-mode waveguide;
a plurality of optical gates configured to provide control of phase of each respective portion of the light beam in the respective single-mode waveguide, and to combine the plurality of portions of the light beam in the plurality of single-mode waveguides into an output light beam.

14. A method for shaping a nearfield of a light beam, the method comprising:

receiving, at a linear transformer input of a linear transformer, the light beam;
distributing, by a plurality of optical gates, a power of the light beam into a plurality of portions of the light beam, each portion of the plurality of portions of the light beam being distributed to a respective single-mode waveguide of a plurality of single-mode waveguides, wherein the plurality of optical gates is configured to provide control of phase of each respective portion of the light beam in the respective single-mode waveguide;
exciting a plurality of modes in a multimode waveguide of a mode transformer, wherein each mode of the plurality of modes is a spatial mode, said mode transformer having a plurality of mode transformer inputs, each mode transformer input of the plurality of mode transformer inputs being connected to a respective single-mode waveguide of the plurality of single-mode waveguides, and wherein the plurality of mode transformer inputs is coupled to the multimode waveguide;
outcoupling, by a mode transformer output, the plurality of modes from the mode transformer
controlling, based on at least the control of the phase of each portion of the light beam in the respective single-mode waveguide, a relationship between the phases of the plurality of modes in the multimode waveguide for controlling a nearfield beam shape of an output light beam based on the plurality of modes outcoupled from the mode transformer.

15. A method for shaping a nearfield of a light beam, the method comprising:

receiving, at a mode transformer input of a mode transformer, a light beam;

propagating, in a multimode waveguide of the mode transformer, the light beam in a plurality of modes, wherein each mode of the plurality of modes is a spatial mode;

outcoupling light of a respective mode of the plurality of modes from the multimode waveguide, at a plurality of mode transformer outputs, each mode transformer output of the plurality of mode transformer outputs being coupled to the multimode waveguide;

coupling light of the respective mode from the multimode waveguide to a single-mode waveguide of a plurality of single-mode waveguides of a linear transformer, each single-mode waveguide of the plurality of waveguides being connected to a respective mode transformer output of the mode transformer, whereby a power of the light beam is distributed into a plurality of portions of the light beam, each portion of the plurality of portions of the light beam being distributed to the respective single-mode waveguide;

providing control, by a plurality of optical gates, of phase of each respective portion of the light beam in the respective single-mode waveguide;

combining, by a plurality of optical gates, the plurality of portions of the light beam in the plurality of single-mode waveguides into an output light beam.

Fig. 1

EP 4 764 629 A1

*Fig. 2a*

*Fig. 2b*

*Fig. 2c*

Fig. 3

Receiving, at a linear transformer input of a linear transformer, the light beam — S501

Distributing, by a plurality of optical gates, a power of the light beam into a plurality of portions of the light beam, distributed to a respective single-mode waveguide, wherein the plurality of optical gates provide control of phase of each respective portion of the light beam in the respective single-mode waveguide — S502

Exciting a plurality of modes in a multimode waveguide of a mode transformer, each of the plurality of mode transformer inputs being connected to a respective single-mode waveguide, and wherein the plurality of mode transformer inputs is coupled to the multimode waveguide — S503

Outcoupling, by a mode transformer output, the plurality of modes from the mode transformer — S504

Controlling a relationship between the phases of the plurality of modes in the multimode waveguide for controlling a nearfield beam shape of an output light beam based on the plurality of modes outcoupled from the mode transformer — S505

Fig. 4

Receiving, at a mode transformer input of a mode transformer, a light beam — S601

Propagating, in a multimode waveguide of the mode transformer, the light beam in a plurality of modes — S602

Outcoupling light of a respective mode from the multimode waveguide, at a plurality of mode transformer outputs coupled to the multimode waveguide — S603

Coupling light of the respective mode from the multimode waveguide to a single-mode waveguide of a plurality of single-mode waveguides of a linear transformer, connected to a respective mode transformer output, whereby a power of the light beam is distributed into a plurality of portions of the light beam, being distributed to the respective single-mode waveguide — S604

Providing control, by a plurality of optical gates, of phase of each respective portion of the light beam in the respective single-mode waveguide — S605

Combining the plurality of portions of the light beam in the plurality of single-mode waveguides into an output light beam — S606

*Fig. 5*

Europäisches
Patentamt
European
Patent Office
Office européen
des brevets

# EUROPEAN SEARCH REPORT

**Application Number**

**EP 24 22 1664**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEIKE ZHAO ET AL: "All-On-chip Reconfigurable Structured Light Generator", ARXIV.ORG, CORNELL UNIVERSITY LIBRARY, 201 OLIN LIBRARY CORNELL UNIVERSITY ITHACA, NY 14853, 11 November 2024 (2024-11-11), XP091926668, * abstract * * Results 1. Concept en Implementation * * Results 4. Synthesis of SAM * * Materials and Methods 2. Silica mode multiplexer design * * Materials and Methods 5. Measurement * * figures 1, S3 * | 1-15 | INV. G02B6/12 G02B27/09 ADD. G02B6/14 |
| A | MOHANTY ASEEMA ET AL: "Reconfigurable nanophotonic silicon probes for sub-millisecond deep-brain optical stimulation", NATURE BIOMEDICAL ENGINEERING, NATURE PUBLISHING GROUP UK, LONDON, vol. 4, no. 2, 1 February 2020 (2020-02-01), pages 223-231, XP037035914, DOI: 10.1038/S41551-020-0516-Y [retrieved on 2020-02-12] * figure 1 * | 5 | |
| A | US 2023/126332 A1 (LI YUNCHU [US] ET AL) 27 April 2023 (2023-04-27) * figures 1, 2 * | 1-15 | |

TECHNICAL FIELDS
SEARCHED (IPC)

G02B

The present search report has been drawn up for all claims

| Place of search | Date of completion of the search | Examiner |
|---|---|---|
| The Hague | 3 June 2025 | Mouget, Mathilde |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 1664

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2025

| Patent document cited in search report | Publication date | Patent family member(s) | Publication date |
|---|---|---|---|
| US 2023126332 A1 | 27-04-2023 | NONE | |

For more details about this annex : see Official Journal of the European Patent Office, No. 12/82